# EUROPÄISCHE PATENTANMELDUNG

(11) **EP 1 953 086 A1**
(43) Veröffentlichungstag der Anmeldung: **06.08.2008**
(21) Anmeldenummer: 07101369.2
(22) Anmeldetag: 30.01.2007
(51) Int. Cl.: B64F 1/32

(54) **Be- und Entladen von Flugfracht**

(71) Anmelder: Kratzmaier - Konstruktionen GmbH, 82547 Eurasburg (DE)
(72) Erfinder: Kratzmaier, Erich, 82547 Eurasburg (DE)
(74) Vertreter: Szynka, Dirk

(57) **Zusammenfassung**

Die Erfindung betrifft einen Flugfrachtbehälter (5) mit einem Boden mit beweglichen Transportelementen und eine Anlage (1 - 5) zum Transportieren und Vereinzeln von Flugfrachtstücken, die einen solchen Flugfrachtbehälter (5) beinhaltet.

## Beschreibung

Die vorliegende Erfindung bezieht sich auf das Be- und Entladen von Flugfracht in einem Flughafen.

Bei Flügen tritt die Handhabung des ein- oder auszuladenden Frachtguts als wesentliches zeitliches, logistisches und technisches Problem in Erscheinung. Dies gilt insbesondere, aber nicht ausschließlich für Flugpassagiergepäck. Wegen der erheblichen und im Lauf der technischen Entwicklung finanziell zunehmenden Größe von Flugzeugen einerseits und des betriebwirtschaftlichen Interesses an Zeit- und Kosteneinsparungen andererseits werden an diesen Bereich hohe Anforderungen gestellt. Im Wesentlichen kommen maschinelle Anlagen mit Förderbändern zum Transport, an die Flugzeuge angepasste Flugzeugcontainer und auch Fahrwagen zum Verfahren solcher Container oder auch Verfahren der Fracht ohne weiteren Container im Bereich des Flughafens in Betracht. Die Flugzeugcontainer werden in beladener Form in das Flugzeug eingeladen und aus dem Flugzeug ausgeladen und im Fracht- oder Gepäckbereich be- bzw. entladen. Bei den Fahrwagen ohne separate Container wird die Fracht oder das Gepäck von dem Wagen in das Flugzeug oder umgekehrt umgeladen.

Der vorliegenden Erfindung liegt das Problem zugrunde, verbesserte Möglichkeiten zum Be- und Entladen von Flugfracht, insbesondere Flugpassagiergepäck, anzugeben.

Die Erfindung richtet sich zunächst auf einen Flugfrachtbehälter zum Transport von Flugfrachtstücken zu einem oder von einem Flugzeug auf einem Flughafen mit einem Boden zum Tragen der Frachtstücke und Seitenwänden, dadurch gekennzeichnet, dass der Boden in seitlicher Richtung bewegliche Elemente aufweist, die dazu ausgelegt sind, die Frachtstücke in der seitlichen Richtung aus dem Flugfrachtbehälter heraus zu transportieren.

Sie richtet sich ferner auch auf eine Anlage zum Transportieren und Vereinzeln von Flugfrachtstücken beim Entladen des Flugzeugs mit einem solchen Flugfrachtbehälter und einem ersten Förderband zur direkten Übernahme der Frachtstücke aus dem Flugfrachtbehälter.

Schließlich richtet sie sich auf ein Verfahren zum Transportieren und Vereinzeln von Flugfrachtstücken beim Entladen eines Flugzeugs unter Verwendung des obigen Flugfrachtbehälters oder der obigen Anlage.

Bevorzugte Ausgestaltungen sind in den abhängigen Ansprüchen angegeben und werden im Folgenden näher erläutert.

Der erfindungsgemäße Flugfrachtbehälter zeichnet sich durch einen Transportboden mit seitlich beweglichen Elementen aus. Diese Ausgestaltung soll dazu dienen, das Beladen und/oder das Entladen (wobei das Umladen natürlich inbegriffen ist) des Flugfrachtbehälters zu erleichtern, indem Frachtstücke oder Stapel oder Haufen von Frachtstücken mit Hilfe dieser beweglichen Elemente auf dem Boden verschoben werden können. Dies geschieht vorzugsweise motorisiert, kann aber auch mit einem Handantrieb erfolgen. Beispielsweise können die seitlich beweglichen Elemente beim Entladen des Flugfrachtbehälters so angetrieben werden, dass sie die Flugfrachtstücke seitlich wegtragen oder über den Boden seitlich wegschieben, so dass sie seitlich leichter (manuell oder maschinell) entnommen werden können oder vorzugsweise sogar einfach auf eine weitere Transporteinrichtung, etwa ein Förderband, abgeworfen werden können. Umgekehrt können aber auch beim Beladen des Flugfrachtbehälters an einer leicht erreichbaren Ladeseite eingeladene Frachtstücke oder aufgeschichtete Stapel oder Haufen mit Hilfe der beweglichen Elemente weiter nach innen geschoben werden, um Platz für weitere Frachtstücke zu schaffen.

Die seitlich beweglichen Elemente können den Boden ganz oder zumindest im Wesentlichen ausmachen; es kann sich also um einen seitlich beweglichen Boden oder Bodenbereich handeln. Es kann sich natürlich auch um Schieber oder ähnliche Einrichtungen zum Transport der Flugfrachtstücke über einen an sich feststehenden Boden handeln. Die erstgenannte Lösung ist bevorzugt, insbesondere in der Ausgestaltung eines beweglichen Förderbandes. Dabei meint der Begriff "Förderband" einen Streckenförderer im allgemeinsten Sinn, beispielsweise eine Rollenbahn oder eine Gliederkette oder eben auch, im engeren Wortsinn, ein eigentliches Band. In den Ansprüchen und im Folgenden wird von Förderbändern gesprochen, wobei Streckenförderer gemeint sind, auch solche über nicht gerade laufende Strecken. Gerade Förderbänder, insbesondere Gliederkettenförderer, sind allerdings bevorzugt.

Ferner kann der Flugfrachtbehälter, der hier übrigens sowohl für die bereits erwähnten flugzeugangepassten Container als auch für Fahrwagen und schließlich auch für andere Behälter zum Transport der Flugfracht von dem Frachtbereich zum Flugzeug oder zurück steht, auch mehr als eine, insbesondere zwei, entgegengesetzte Ladeseiten aufweisen. Beispielsweise können die Längsseiten eines Flugfrachtbehälters mit rechteckigem Grundriss als Ladeseiten dienen, wobei dort vorzugsweise dennoch Seitenwände vorgesehen sein können, etwa in der Form von Planen oder auch Rollläden, die zu öffnen, insbesondere nach oben wegzuschieben sind.

Der erfindungsgemäß mit Transportelementen ausgestattete Flugfrachtbehälterboden ist vorzugsweise zumindest zweigeteilt, besonders bevorzugter Weise viergeteilt, wobei die Grenze zwischen den Bodenanteilen vorzugsweise senkrecht und/oder parallel zu einer Ausladeseite verläuft. Durch die Aufteilung sollen Frachtstücke auf verschiedenen Bodenanteilen nacheinander transportiert werden können, insbesondere beim Entladen. Beispielsweise können bei einer Vierteilung nacheinander erst der linke vordere Bereich, dann der rechte vordere Bereich, dann einer der beiden hinteren Bereiche und schließlich der verbleibende hintere Bereich entladen werden. Genauso kann die Transportmöglichkeit durch die beweglichen Elemente zum Hineinschieben von Frachtstücken verwendet werden, während andere Flugfrachtbehälterteile bereits vollgeladen sind, wenn in dem noch zu beladenden Bereich ein eigenständiger Transportmechanismus vorhanden ist.

Der Flugfrachtbehälterboden ist natürlich im Wesentlichen horizontal, um die Flugfrachtstücke tragen zu können, kann aber vorteilhafterweise von einer Ladeseite aus etwas nach innen verkippt sein. Damit können nicht sehr stabil aufgetürmte Frachtstückstapel oder -haufen stabilisiert werden. Insbesondere können von zwei entgegengesetzten Ladeseiten aus jeweils zugeordnete Bodenhälften nach innen und damit aufeinander zu verkippt sein.

Eine besonders bevorzugte Variante des beschriebenen Flugfrachtbehälters ist als Fahrwagen, insbesondere als Anhänger ohne eigenen Antrieb, vorgesehen.

Mit einem solchen Anhänger, aber auch mit einem flugzeugangepassten Container mit erfindungsgemäß ausgestaltetem Transportboden, kann die Flugfracht beim Entladen von dem Flugzeug zu einem ersten Förderband einer erfindungsgemäßen Anlage transportiert werden, um dort direkt durch das Förderband übernommen zu werden. "Direkt" bedeutet hier, dass keine Transportvorrichtung zwischengeschaltet ist und vorzugsweise, aber nicht notwendigerweise, auch keine manuelle Hilfe vorgesehen ist. Insbesondere können die Flugfrachtstücke mit Hilfe der beschriebenen Transportelemente des Behälterbodens seitlich ausgefahren werden, um auf das Förderband übergeben oder abgeworfen zu werden.

Eine weitere erfindungsgemäße Anlage nach Anspruch 11 ist besonders in Verbindung mit den beschriebenen Flugfrachtbehältern von Vorteil, soll hier aber vorsorglich auch unabhängig davon offenbart sein. Die Merkmale des Anspruchs 11 sind also auch ohne die Merkmale des Anspruchs 1 oder des Anspruchs 10 erfindungsrelevant. Die Ausgestaltung nach Anspruch 11 sieht vor, dass eine Anlage zum Transportieren und Vereinzeln, insbesondere einer mit direkter Übergabe der Flugfracht von dem erfindungsgemäßen Behälter auf das erste Förderband, nach einem, insbesondere dem erwähnten ersten, Förderband eine kippbare Zwischenablage für die Frachtstücke aufweist. Diese ist dazu vorgesehen, dass mit dem Förderband antransportierte Frachtstücke auf die Zwischenablage verbracht werden und dort entweder schon bei der Ablage auf der Zwischenablage oder jedenfalls darauf folgend im Rahmen einer Kippbewegung der Zwischenablage an einen Anschlag stoßen und von diesem gehalten werden. Die Kippbewegung der Zwischenablage wird fortgesetzt, bis sie das oder die Frachtstücke auf eine weitere Transporteinrichtung, insbesondere ein weiteres Förderband, abwirft.

Es hat sich herausgestellt, dass schon die Übergabe von dem Förderband zu der Zwischenablage, weiterhin auch die Anlage an dem Anschlag und schließlich auch das Verbringen auf die folgende Transporteinrichtung durch den Kippvorgang bei der Vereinzelung der u. U. noch haufenweise antransportierten Flugfrachtstücke in günstiger Weise helfen. Ganz oder teilweise übereinanderliegende Frachtstücke werden durch die verschiedenen Übergabevorgänge, durch die Anlage oder im Laufe der Kippbewegung wenn nicht schon getrennt, dann doch zumindest weiter "entkoppelt". Dies gilt insbesondere bei einer Erfassung des Beladungszustands der Zwischenablage und entsprechenden Steuerung des herantransportierenden Förderbands. Damit kann das herantransportierende Förderband gestoppt werden, wenn die Zwischenablage bereits belegt ist, so dass eventuelle Haufen durch getrenntes Verbringen auf die Zwischenablage getrennt werden. Nach derselben Überlegung kann auch die Übergabe der Frachtstücke von der Zwischenablage auf die folgende Transporteinrichtung abhängig von der Beladung des Aufnahmebereichs dort gesteuert werden.

Die Kippbewegung kann vorzugsweise eine Zwischenpause aufweisen. Diese kann im Wesentlichen im Bereich einer horizontalen Ausrichtung einer (vorzugsweise geraden) Anlagefläche der Zwischenablage erfolgen, so dass die Frachtstücke in dieser Position weitgehend von dem Anschlag gehalten werden. Die Frachtstücke können sich dabei auf dem Anschlag ausrichten. Es kann auch durch eine relativ schnelle Kippung in diese Position oder ein relativ rasches Abbremsen in dieser Position erreicht werden, dass einzelne Frachtstücke - die Zwischenablage kann durchaus mehrfach belegt sein, wobei die Frachtstücke vorzugsweise nebeneinander liegen - bereits überkippen und auf die folgende Transporteinrichtung fallen, während andere noch stehenbleiben und im Sinn einer Vereinzelung erst bei einem darauf folgenden zweiten Teil der Kippbewegung weitertransportiert werden. Auch diese Vorgänge können natürlich Bestandteil der Überwachung des Beladungszustands und einer entsprechenden Steuerung sein.

Ferner weist die Zwischenablage vorzugsweise einen zylindermantelförmigen Abschnitt auf, der sich an die Anlagefläche anschließt und konzentrisch zu der Achse der Kippbewegung ist. Dieser Bereich kann bei der Kippbewegung aus einem Übergangsschlitz zu dem herantransportierenden Förderband herausgekippt und dort hineingekippt werden. Ferner können evtl. bei einem herausgekippten Zustand des Zylindermantelabschnitts darauf aufgeschobene Frachtstücke ohne weitere Behinderung liegen bleiben, auch wenn die Zwischenablage unter ihnen zurückgekippt wird.

Ferner ist vorzugsweise vorgesehen, das herantransportierende Förderband zu der Zwischenablage schräg ansteigen zu lassen, insbesondere so, dass ein durch das Ablegen auf die Zwischenablage und das Abwerfen von dieser auf die nachfolgende Transporteinrichtung bedingter Höhensprung durch den schrägen Höhenanstieg ganz oder teilweise kompensiert oder auch überkompensiert wird. Zur Veranschaulichung wird auf das Ausführungsbeispiel verwiesen. Alternativ zu dem schrägen Förderband ist auch eine Hubvorrichtung möglich.

Ein weiterer Aspekt der erfindungsgemäßen Transport- und Vereinzelungsanlage ist in Anspruch 16 angegeben, wobei auch dieser Anspruch vorsorglich unabhängig von den bisher diskutierten Merkmalen, insbesondere denen des Anspruchs 11 und/oder des Anspruchs 1, offenbart sein soll. Die verschiedenen denkbaren Kombinationen dieser Ansprüche sind natürlich besonders bevorzugt. Bei der Ausgestaltung nach Anspruch 16 geht es um zumindest drei Förderbänder in einer erfindungsgemäßen Anlage mit zumindest zwei Übergangsstellen dazwischen, bei denen die Transportrichtung um ungefähr 90° verändert wird. Es hat sich herausgestellt, dass solche Übergänge, insbesondere zwischen Förderbändern und insbesondere, aber nicht notwendigerweise, in Verbindung mit den bereits beschriebenen Überwachungen eines Aufnahmebereichs eines folgenden Förderbandes und Steuerung einer vorangehenden Transportvorrichtung, zur Entkopplung und Vereinzelung der Gepäckstücke beitragen und gleichzeitig einen geringen technischen Aufwand bilden. Außerdem bieten die Förderbänder mit den Übergängen sehr flexible räumliche Gestaltungsmöglichkeiten. Besonders bevorzugt sind vier Förderbänder, vorzugsweise mit drei mit dem Transportrichtungswechsel verbundenen Übergangsstellen. Die oben beschriebene Zwischenablage zählt hier übrigens nicht als Transporteinrichtung, sondern bildet, wenn ihr ein Förderband folgt, auch einen Übergang zwischen Förderbändern in diesem Sinn. Für die Steuerung bedeutet dies vorzugsweise, dass sowohl der Beladungszustand auf der Zwischenablage als auch der auf dem folgenden Förderband überwacht und sowohl das der Zwischenablage vorgeschaltete Förderband als auch die Zwischenablage in ihrem Betrieb entsprechend gesteuert werden können.

Schließlich ist ausdrücktich festzustellen, dass die beschriebenen Merkmale der Erfindung sowohl Bedeutung für die vorrichtungsmäßige Ausgestaltung als auch für die Verwendung der verschiedenen Vorrichtungen und schließlich deren Betrieb, als ein Verfahren, haben. Hierzwischen wird bei der Beschreibung nicht im Einzelnen explizit unterschieden. Die Erfindung richtet sich grundsätzlich auf die verschiedenen Anspruchskategorien.

Insbesondere ist bevorzugt, dass der bereits erwähnte direkte Übergang von dem Flugfrachtbehälter auf ein erstes Förderband der Anlage sowohl für Fahrwagen als auch für flugzeugangepasste, eigenständig nicht fahrbare Container geeignet ist. Die Fahrwagen und Container können, müssen dabei aber nicht mit den seitlich beweglichen Transportelementen des Bodens ausgestattet sein. Vornehmlich geht es hier darum, dass derselbe Übergabeplatz für beide Flugfrachtbehältertypen geeignet ist und beide in dem bereits erwähnten Sinn "direkt" übergeben können.

Für die Container ist hierbei besonders bevorzugt, dass sie zum Entladen um eine horizontale Achse gekippt werden, wobei die Flugfrachtstücke durch eine Containeröffnung ausgeschüttet werden. Diese Öffnung kann seitlich oder auch an der Oberseite vorgesehen sein, vorzugsweise in einer der größeren Seitenflächen. Die Frachtstücke werden auf das Förderband gekippt und wie bereits beschrieben vereinzelt und ausgerichtet, um letztlich dem Ausgabeband für die Passagiere zugeführt zu werden.

Bei einer besonders einfachen Ausgestaltung wird der Flugfrachtcontainer über zumindest eine seiner Seitenkanten als horizontale Achse gekippt, also nicht eigens gehalten oder gelagert, um die Kippung zu bewerkstelligen.

Die Erfindung hat besondere Bedeutung für Flugpassagiergepäck, ist aber auch für andere Flugfrachtstücke, etwa Pakete, von Interesse.

Im Folgenden wird die Erfindung anhand eines Ausführungsbeispiels näher erläutert, wobei die offenbarten Merkmale auch in anderen Kombinationen erfindungswesentlich sein können und sich, wie bereits erwähnt, grundsätzlich auf alle Anspruchskategorien beziehen.
- Die Figuren 1a - c: zeigen eine erfindungsgemäße Anlage in schematischer Vereinfachung und drei verschiedenen perspektivischen Darstellungen.
- Die Figuren 2a - g: zeigen die Anlage aus den Figuren 1a-c in zeitlich aufeinander folgenden Betriebszuständen in Draufsicht.
- Die Figuren 3a - f: zeigen die Anlage aus den Figuren 1 a - c und 2a - g in zeitlich aufeinander folgenden Betriebszuständen in Seitenansicht.
- Die Figuren 4a - d: zeigen weitere zeitlich aufeinander folgende Betriebszustände analog die Figuren 3a-f.

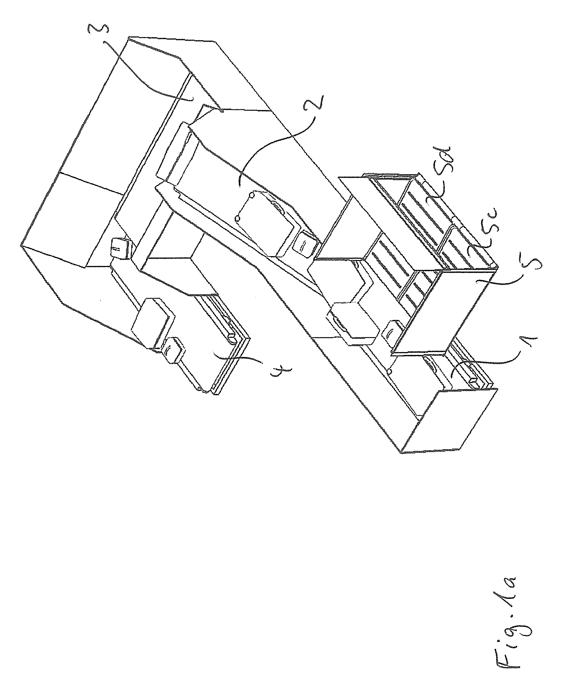

Die Figuren zeigen eine erfindungsgemäße Anlage in verschiedenen Darstellungen, wobei die perspektivischen Ansichten in den Figuren 1a - 1c einen guten ersten Überblick geben. Mit 1, 2, 3 und 4 sind ein erstes bis viertes Förderband bezeichnet. Es handelt sich um von jeweils an den Endpunkten angeordneten Walzen angetriebene gummibeschichtete Bänder, die auf plattenartigen Laufschienen laufen. Das erste Förderband 1 erhält aus einem Flugzeug ausgeladenes Gepäck aus einem Flugfrachtbehälter 5, der als Fahranhänger mit hier nicht dargestellten Rädern und zwei in den Figuren erkennbaren festen Seitenwänden an den kürzeren Seiten ausgebildet ist. Die dem ersten Förderband 1 zugewandte längere Seitenwand kann, wie für die gegenüber liegende Seitenwand schematisch dargestellt, geöffnet und hochgeschoben werden, ist hier aber der Übersichtlichkeit halber weggelassen. Das Gleiche gilt für das Dach des Flugfrachtbehälters 5. Bei den beweglichen Seitenwänden kann es sich entweder um Klappen, vertikale Schiebetüren (wie gezeichnet), nach oben weg zu schiebende Planenabschnitte oder andere bekannte Möglichkeiten handeln. Der Flugfrachtbehälter 5 ist mit den beiden zu öffnenden Längsseitenwänden symmetrisch ausgestattet und kann damit beidseits an dem ersten Förderband 1 "anlegen" und an dem Flugzeug auch von einer beliebigen Seite oder beiden Seitengleichzeitig beladen werden.

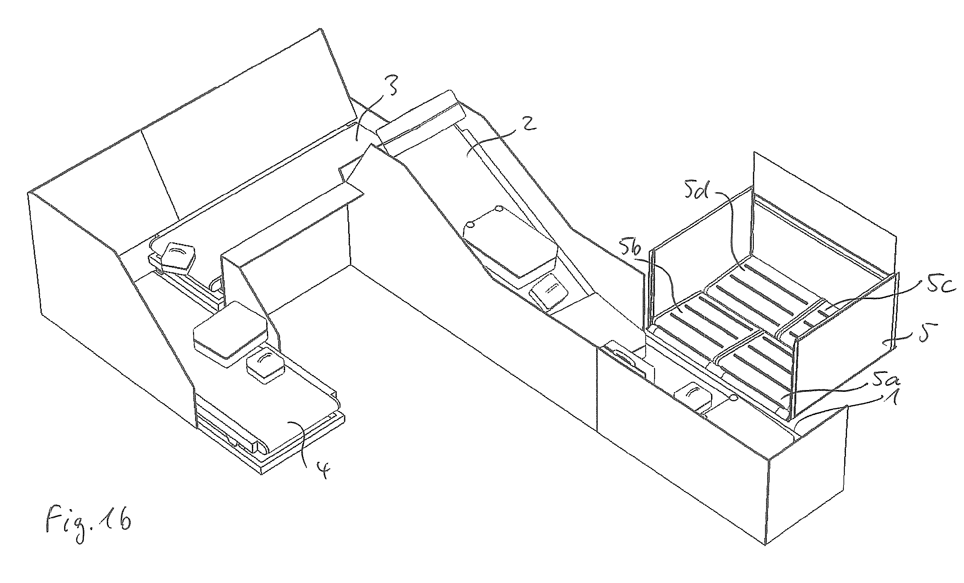

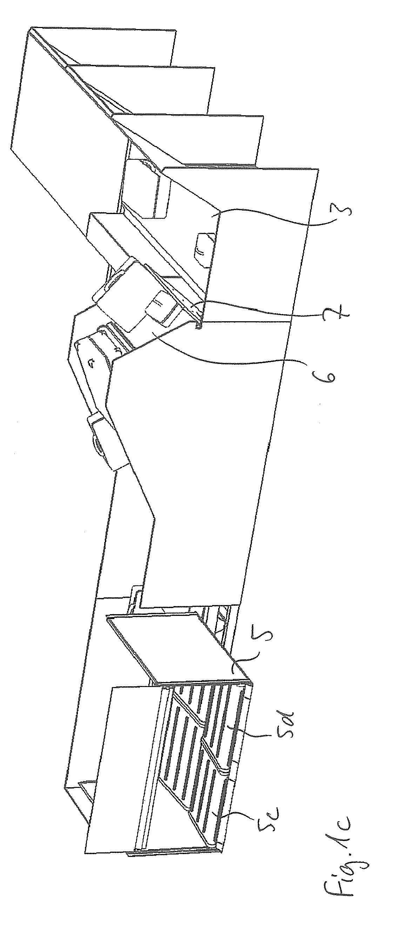

Der Flugfrachtbehälter 5 weist einen in vier Bodenanteile aufgeteilten Boden auf, der in diesen Bodenanteilen jeweils aus einem Gliederkettentrum 5a - d besteht. Diese sind getrennt voneinander antreibbar und mit quer zur Transportrichtung liegenden Leisten bewehrt. Man kann in den Figuren 1b und 1c erkennen, dass die Trume 5a und b einerseits und 5c und d andererseits jeweils etwas aus der Horizontalen nach Innen verkippt sind, um möglicherweise etwas instabile Gepäckhaufen darauf beim Transport zu stabilisieren. Nach Heranfahren des Flugfrachtbehälters 5 an das erste Förderband 1 und Öffnen der ausladeseitigen Seitenwand (die entgegengesetzte Seitenwand kann, anders als gezeichnet, geschlossen bleiben) kann beispielsweise zuerst die Gliederkette mit dem Trum 5a oder die mit dem Trum 5b angetrieben werden, um etwa die Hälfte des vorderen Gepäcks auf das erste Förderband 1 abzuwerfen. Danach können die Gepäckstücke auf dem jeweils verbleibenden ausladeseitigen Trum und danach durch zusätzlichen Antrieb der hinteren Trume 5c und 5d nacheinander auch die hinteren Gepäckstücke ausgeworfen werden. Die Gepäckstücke fallen ungeordnet auf das erste Förderband 1 und werden von diesem und im Folgenden von den weiteren Förderbändern 2 - 4 sowie einer noch im Einzelnen zu beschreibenden Zwischenablage 6 mit einem Anschlag 7 (wie bei 1 c) weiter transportiert. Die Übergänge zwischen den Förderbändern 1 - 4 sowie auch der Übergang zwischen dem vierten Förderband 4 und einem nicht gezeichneten folgenden und quer zu dem vierten Förderband 4 verlaufenden fünften Förderband dienen zur Vereinzelung und Separierung der einzelnen Gepäckstücke, wie im Folgenden noch näher erläutert.

Das fünfte Förderband transportiert die Gepäckstücke weiter zur Ausgabe an die Passagiere oder zum Umladen in ein weiteres Flugzeug.

An der dargestellten Seitenkante des ersten Förderbandes 1 kann statt des Fahranhängers auch ein Flugfrachtbehälter in Gestalt eines an den Fracht- oder Gepäckraum eines Flugzeuges angepassten Containers herangefahren werden, insbesondere auf einem hierfür vorgesehenen Fahrwagen. Dieser hier nicht dargestellte Container kann über eine nicht dargestellte Kippvorrichtung, etwa als Bestandteil des Fahrwagens, beispielsweise über die dem ersten Förderband 1 zugewandte untere Seitenkante als horizontale Kippachse auf das erste Förderband 1 gekippt werden. Auch dabei entsteht ein im Wesentlichen ungeordneter Haufen von Gepäckstücken, wie es bereits für den in den Figuren dargestellten Fahranhänger erläutert wurde.

Die Figuren zeigen ferner nicht näher bezeichnete seitliche Vermeidungen der Anlage, die ein Herabfallen von Gepäckstücken von den Förderbändern verhindern sollen.

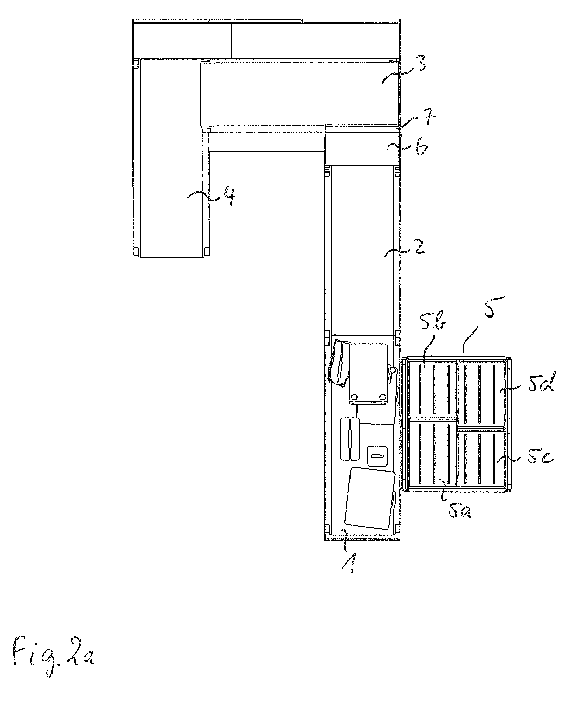

Figur 2a zeigt in Draufsicht die Situation, in der ein Gepäckstückhaufen aus dem Flugfrachtbehälter ausgeladen worden ist. Hierbei kann es sich um einen Teil des Inhaltes des Flugfrachtbehälters 5 handeln, wobei der Rest noch in dem Flugfrachtbehälter verblieben ist, etwa in dem ladeseitenabgewandten Bereich 5c, d (dort nicht eingezeichnet), und/oder sich bereits im Bereich der folgenden Förderbänder 2, 3, 4 befindet (dort ebenfalls nicht eingezeichnet).

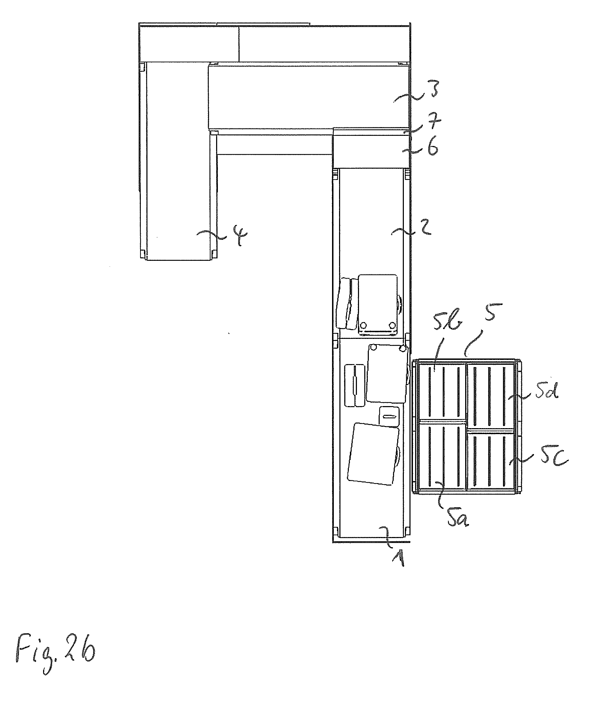

Figur 2b zeigt eine darauf folgende Situation, in der durch einen Transport des ersten Förderbandes 1 um eine gewisse Strecke die in Transportrichtung vordersten beiden Gepäckstücke bereits auf das zweite Förderband 2 übergegangen sind, wodurch sie von verbleibenden Gepäckstücken auf dem ersten Förderband 1 getrennt wurden. Dies erfolgt dadurch, dass das erste Förderband die Gepäckstücke so weit vorwärts bewegt, bis sie von dem zweiten Förderband 2 gegriffen werden und dieses dann die gegriffenen vordersten Gepäckstücke weiterfördert, während das erste Förderband 1 stoppt. Damit konnten die vordersten Gepäckstücke bereits von den folgenden getrennt werden, wobei die beiden vordersten Gepäckstücke dennoch miteinander etwas verkeilt sind.

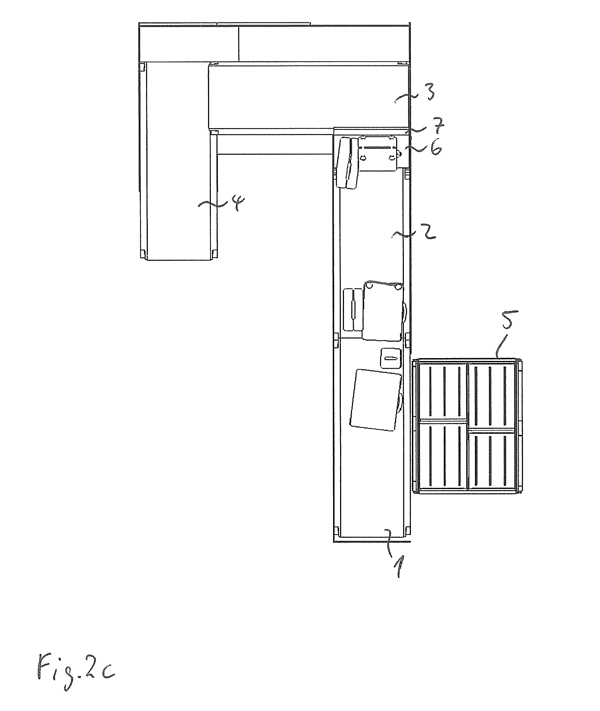

Figur 2c zeigt einen folgenden Zustand, in dem das zweite Förderband 2, das schräg ansteigt (vgl. Figuren 1a bis c), die vordersten Gepäckstücke über seine oberste Kante hinweg auf die Zwischenablage 6 transportiert hat. Dort liegen sie auf dem Anschlag 7 auf, und zwar vergleichbar der in den Figuren 1c und auch 4a dargestellten Situation.

Da gegenüber Figur 2b der untere Aufnahmebereich des zweiten Förderbandes 2 wieder frei geworden ist, hat das erste Förderband 1 die nächsten Gepäckstücke auf das zweite Förderband 2 transportiert und wurde nach deren Übernahme durch das zweite Förderband 2 gestoppt.

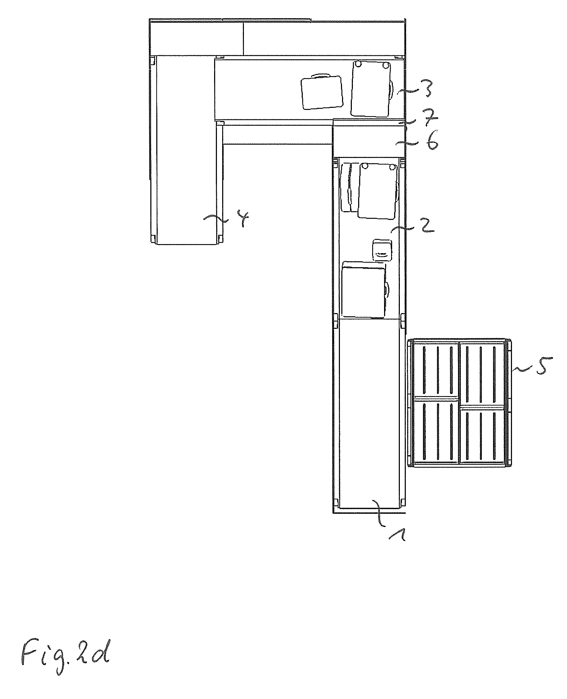

Figur 2d zeigt eine zeitlich folgende Situation, in der die vordersten Gepäckstücke von der Zwischenablage 6 in einer im Folgenden noch näher beschriebenen Weise auf das dritte Förderband 3 abgeworfen wurden, wobei diese voneinander getrennt wurden. Ferner wurde das in Figur 2c von dem zweiten Förderband 2 bereits erfasste Gepäckstückpaar an den oberen Rand des zweiten Förderbandes 2 transportiert und das letzte Gepäckstückpaar auf dem unteren Bereich des zweiten Förderbandes 2 übernommen, wobei sein Abstand zu dem vorausgehenden Gepäckstückpaar vergrößert wurde, wie der Vergleich zu den Figuren 2b und 2c zeigt.

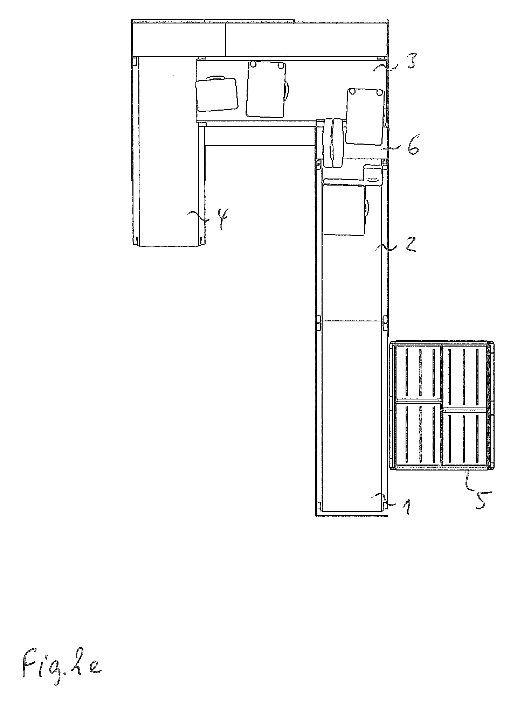

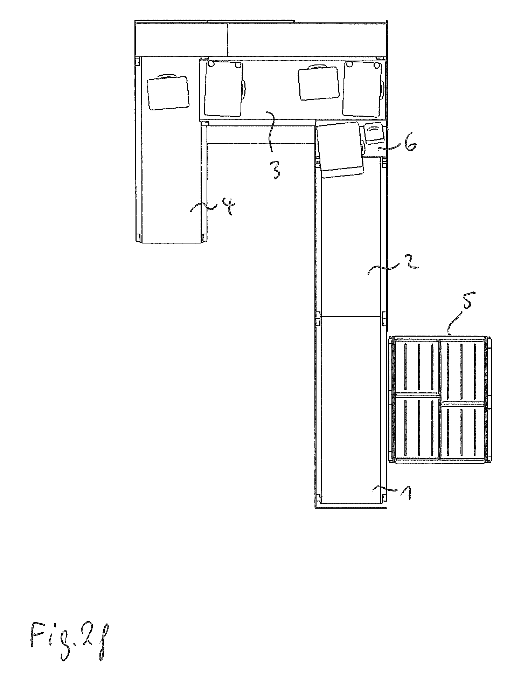

Figur 2e zeigt, wie das zweite Gepäckstückpaar von der Zwischenablage 6 auf das dritte Förderband 3 abgeworfen wird. Das rechte der beiden Gepäckstücke ist schon übergekippt, während das linke in einer weiteren Phase der weiter unten noch näher beschriebenen Kippbewegung der Zwischenablage 6 folgen wird, wie Figur 2f zeigt. Der Aufnahmebereich des dritten Förderbandes 3 ist frei, weil das vorderste Gepäckstückpaar weiter nach links transportiert wurde.

In Figur 2f befindet sich auch das letzte Gepäckstückpaar auf der Zwischenablage 6, während eines der Gepäckstücke des ersten Paares bereits von dem vierten Förderband 4 übernommen wurde.

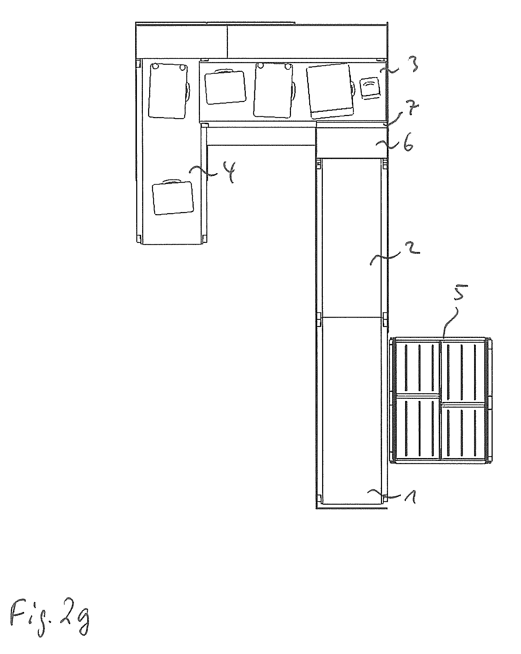

In Figur 2g ist auch das zweite Gepäckstück des ersten Paares von dem vierten Förderband 4 übernommen worden und ist das zweite Paar weiter nach links transportiert worden, sodass das dritte Paar von der Zwischenablage 6 auf das dritte Förderband 3 abgeworfen werden konnte. In der beschriebenen Weise läuft nun der Betrieb des dritten Förderbandes 3 und des vierten Förderbandes 4 weiter, wobei das vierte Förderband 4 die Gepäckstücke einzeln auf ein nicht dargestelltes fünftes Förderband übergibt (das wiederum im rechten Winkel zu dem vierten Förderband verläuft). Sobald auf dem vierten Förderband 4 im Aufnahmebereich Platz frei wird, fördert das dritte Förderband 3 ein weiteres Gepäckstück nach.

Insgesamt ergibt sich durch die Übergaben zwischen den Förderbändern 1 bis 4 und die 90°-Anordnung dazwischen eine Entkopplung, Entzerrung und Vereinzelung der einzelnen Gepäckstücke aus dem anfänglichen Haufen. Auch wenn miteinander etwas verkeilte Gepäckstücke, in dem vorliegenden Beispiel die drei Paare, möglicherweise noch auf dem zweiten oder vielleicht sogar dem dritten Förderband 2 bzw. 3 nicht völlig voneinander getrennt sind, so besteht bei der weiteren Übergabe auf das vierte Förderband 4 und schließlich bei der letzten Übergabe auf das fünfte Förderband eine weitere Gelegenheit zur Entkopplung.

Dabei können natürlich auch Anlagekanten Verwendung finden, im vorliegenden Fall beispielsweise der Anschlag 7 der Zwischenablage 6, wobei die Ausrichtung darauf durch die Abwurfbewegung wieder etwas aufgehoben wird, wie beispielsweise Figur 2g zeigt.

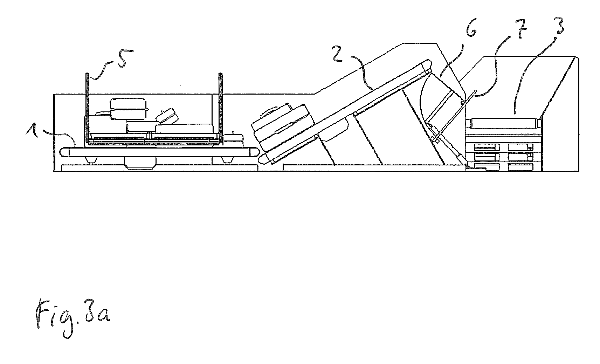

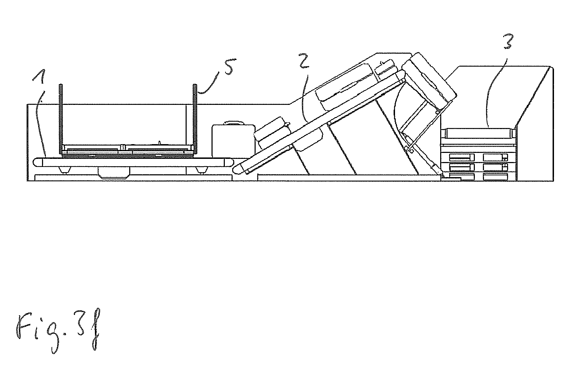

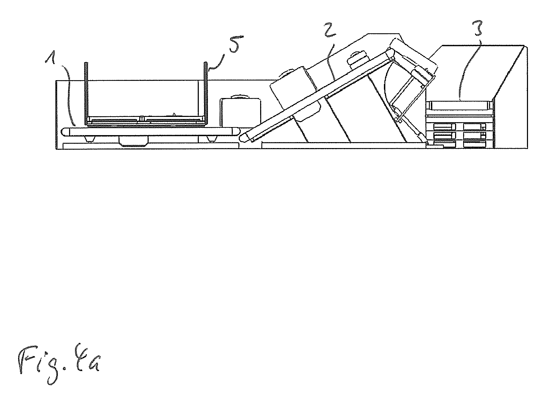

Die Figuren 3a bis f und 4a bis d zeigen vergleichbare Vorgänge in seitlicher Darstellung. Dabei sind die in Figur 1c vorderen Seitenwände der Anlage der Übersichtlichkeit halber weggelassen. Man erkennt in Figur 3a einen auf dem ersten Förderband 1 befindlichen Gepäckstückhaufen, der aus dem Flugfrachtbehälter 5 ausgeladen worden ist. Ein erstes Gepäckstückpaar befindet sich bereits auf dem zweiten schräg ansteigenden Förderband 2.

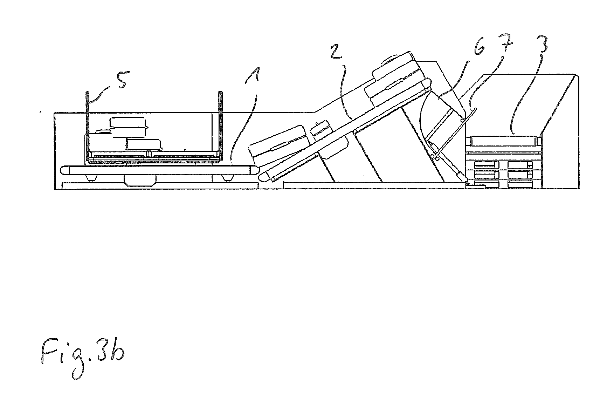

In Figur 3b befinden sich auf dem zweiten Förderband 2 bereits vier Gepäckstücke, wobei das erste Gepäckstückpaar an der oberen Kante zur Übergabe auf die Zwischenablage 6 ansteht. Diese besteht aus einer geraden Anlagefläche, die an das zweite Förderband 2 anschließt, und einem diesem Anschluss entgegengesetzten Anschlag 7 im rechten Winkel zu der Anlagefläche.

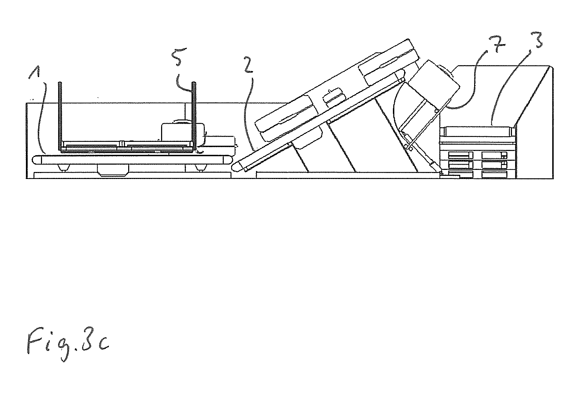

In Figur 3c ist ein erstes der Gepäckstücke des ersten Paares, nämlich das mit dem etwas weiter vorne liegenden Schwerpunkt, auf die Zwischenablage 6 herabgefallen und an den Anschlag 7 angestoßen. Das zweite Förderband 2 ist gestoppt.

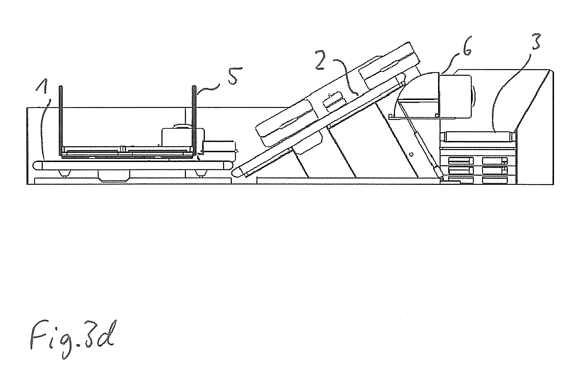

Figur 3d zeigt, wie sich die Zwischenablage 6 um eine in dem Übergang zwischen der geraden Anlagefläche und dem Anschlag 7 liegende Drehachse verkippt und damit die gerade Anlagefläche in die Vertikale bringt. Dies geschieht mithilfe eines nicht bezifferten und schematisch dargestellten Pneumatikzylinders. Ein an die gerade Anlagefläche anschließender und in den Figuren 3a bis 3c unter dem zweiten Förderband 2 verborgener Zylindermantelabschnitt der Zwischenablage 6 ist nun teilweise exponiert.

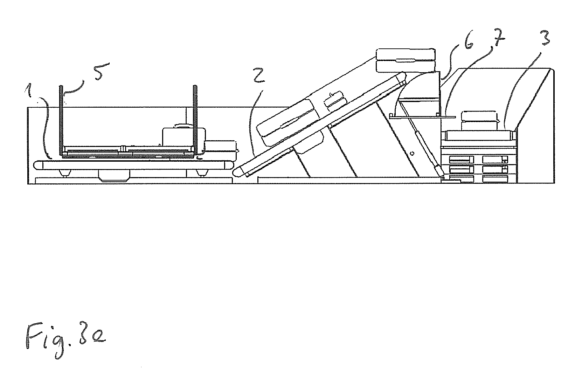

Dies kann von Vorteil sein, wenn wie in Figur 3e dargestellt ein folgendes Gepäckstück beabsichtigt oder unbeabsichtigt auf die Zwischenablage 6 fällt. Ferner zeigt Figur 3e das in Figur 3d noch auf dem Anschlag 7 ruhende Gepäckstück auf dem dritten Förderband 3. Wenn es nicht bereits von selbst aus der in Figur 3d gezeigten Situation herab gefallen ist, so fällt es jedenfalls bei einer über die in den Figuren 3d und e gezeigte vertikale Lage der geraden Anlagefläche hinausgehenden Kippbewegung, die nicht dargestellt ist. Wenn die Zwischenablage 6 zurück gekippt wird, fällt das in Figur 3e bereits auf dem Zylindermantelabschnitt aufliegende Gepäckstück auf den Anschlag 7, sodass eine Figur 3c vergleichbare Situation hergestellt ist.

Die in den Figuren 3a bis f dargestellten und nicht näher beschriebenen Strukturen unter den Förderbändern sind für die Erfindung nicht wesentliche Bestandteile, insbesondere Auflager. Insbesondere im Falle der Strukturen unter dem dritten Förderband 3 handelt es sich um Bestandteile eines Versuchsaufbaus.

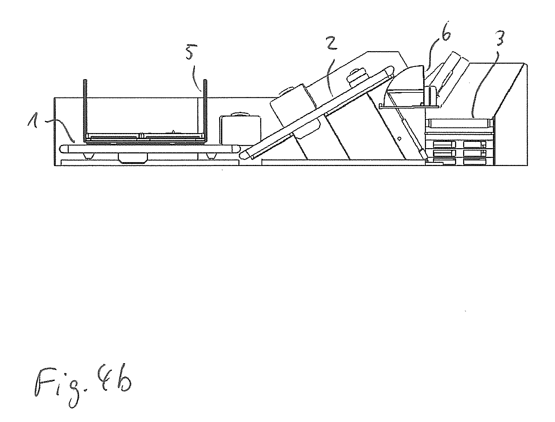

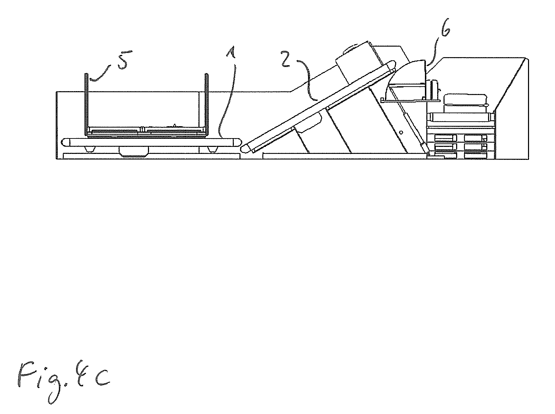

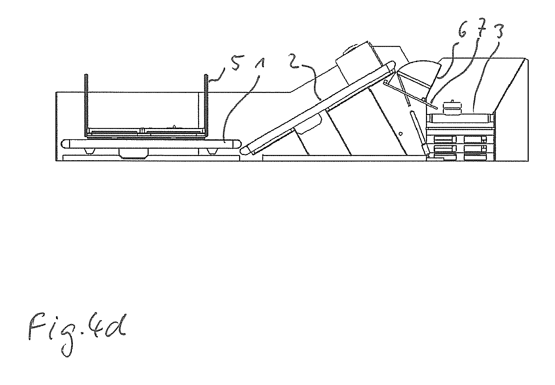

Die Figuren 4a bis d zeigen eine ähnliche Abfolge von Situationen wie die Figuren 3a bis f. Eine Besonderheit liegt in Folgendem: In Figur 4a sind zwei Gepäckstücke auf der Zwischenablage 6 gezeigt. Durch die Kippbewegung von Figur 4a zu Figur 4b, nämlich in die vertikale Position der geraden Anlagefläche, fällt eines der beiden Gepäckstücke bereits auf das dritte Förderband 3, das andere, hier mit besonders tief liegendem Schwerpunkt, aber nicht. Auch solche Situationen können zur Vereinzelung genutzt werden, indem dann das in Figur 4c bereits auf dem dritten Förderband 3 liegende Gepäckstück von diesem weiterverfahren wird und das auf der Zwischenablage 6, hier konkret dem Anschlag 7, verbliebene Gepäckstück gemäß Figur 4d durch die bereits erwähnte weitere Kippbewegung nachgeworfen wird. Zwischen den beiden Stationen der Kippbewegung herrscht eine Zwischenpause, die dem Zustand in Figur 4c entspricht.

Man erkennt an den Figuren, dass das zweite Förderband 2 durch seine schräge Position den durch den Bewegungsablauf an der Zwischenablage 6 erforderlichen Höhenverlust der Gepäckstücke überkompensiert. Der verbleibende Teil dieses Höhengewinns wird bei der Übergabe von dem dritten Förderband 3 auf das vierte Förderband 4 genutzt, wie beispielsweise die Figuren 1 a und 1b zeigen. Natürlich könnten auch andere Höhenverläufe verwendet werden. Insbesondere könnte das zweite Förderband 2 horizontal venaufen, wenn insgesamt eine bauliche Situation herrscht, die einen entsprechenden Höhenverlust von dem ersten Förderband 1 bis zu dem vierten Förderband 4 erlaubt, etwa indem von einem Stockwerk in das darunter liegende gefördert wird. In einer solchen Situation wäre es von Vorteil, wenn auch das erste Förderband 1 und das zweite Förderband 2 unter 90° zueinander verlaufen würden.

## Patentansprüche

1. Flugfrachtbehälter (5) zum Transport von Flugfrachtstücken zu einem oder von einem Flugzeug auf einem Flughafen mit
einem Boden zum Tragen der Frachtstücke
und Seitenwänden,
**dadurch gekennzeichnet, dass** der Boden in seitlicher Richtung bewegliche Elemente (5a - d) aufweist, die dazu ausgelegt sind, die Frachtstücke in der seitlichen Richtung aus dem Flugfrachtbehälter (5) heraus zu transportieren.

2. Flugfrachtbehälter (5) nach Anspruch 1, bei dem der Boden ein bewegliches Förderband (5a - d) aufweist.

3. Flugfrachtbehälter (5) nach Anspruch 2, bei dem das Förderband ein Gliederkettentrum (5a - d) als Bodenbestandteil aufweist.

4. Flugfrachtbehälter (5) nach einem der vorstehenden Ansprüche, der zum Be- oder Entladen an zwei entgegengesetzten Seiten ausgelegt ist.

5. Flugfrachtbehälter (5) nach einem der vorstehenden Ansprüche, bei dem die Transportelemente (5a - d) so aufgeteilt sind, dass Frachtstücke auf zumindest zwei Bodenanteilen durch getrennte Transportelemente (5a - d) nacheinander transportiert werden können.

6. Flugfrachtbehälter (5) nach Anspruch 5, bei dem die Grenze zwischen den Bodenanteilen senkrecht zu einer Ausladeseite des Flugfrachtbehälters (5) verläuft.

7. Flugfrachtbehälter (5) nach Anspruch 5 oder 6, bei dem die Grenze zwischen den Bodenanteilen parallel zu einer Ausladeseite des Flugfrachtbehälters (5) verläuft.

8. Flugfrachtbehälter (5) nach einem der vorstehenden Ansprüche, bei dem der Boden von einer Ladeseite aus etwas nach innen aus der Horizontalen verkippt ist.

9. Flugfrachtbehälter nach einem der vorstehenden Ansprüche, der als Fahrwagen, insbesondere Anhänger, ausgestaltet ist.

10. Anlage (1 - 7) zum Transportieren und Vereinzeln von Flugfrachtstücken beim Entladen eines Flugzeugs in einem Flughafen mit
einem Flugfrachtbehälter (5) nach einem der vorstehenden Ansprüche
und einem ersten Förderband (1) zur direkten Übernahme der Frachtstücke aus dem Flugfrachtbehälter (5).

11. Anlage (1 - 7) zum Transportieren und Vereinzeln von Flugfrachtstücken beim Entladen eines Flugzeugs in einem Flughafen (auch) nach Anspruch 10 mit
einem Förderband (1, 2),
einer kippbaren Zwischenablage (6) für die Frachtstücke
und einem Anschlag (7),
die dazu ausgelegt ist, Frachtstücke mit dem Förderband (1, 2) auf die Zwischenablage (6) zu transportieren,
diese dann zu kippen, wobei die Frachtstücke von dem Anschlag (7) gehalten werden,
und die Frachtstücke dann durch die Kippbewegung auf eine weitere Transporteinrichtung (3) abzuwerfen.

12. Anlage (1 - 7) nach Anspruch 11 mit einer Einrichtung zur Beladungszustandserfassung an der Zwischenablage(6), die dazu ausgelegt ist, die weitere Transporteinrichtung (3) zu steuern.

13. Anlage (1 - 7) nach Anspruch 11 oder 12, bei der die Zwischenablage (6) dazu ausgelegt ist, dass die Kippbewegung eine Zwischenpause aufweist, in der die Frachtstücke weitgehend von dem Anschlag (7) gehalten werden.

14. Anlage (1 - 7) nach einem der Ansprüche 11 bis 13, bei der die Zwischenablage (6) eine gerade Anlagefläche für die Frachtstücke und einen sich daran anschließenden Zylindermantelabschnitt aufweist, dessen Zylinderachse die Kippachse der Kippbewegung ist.

15. Anlage (1 - 7) nach einem der Ansprüche 11 bis 14, bei der das Förderband (2) zu der Zwischenablage (6) schräg ansteigt.

16. Anlage (1 - 7) zum Transportieren und Vereinzeln von Flugfrachtstücken beim Entladen eines Flugzeugs in einem Flughafen (auch) nach einem der Ansprüche 10 bis 15 mit
zumindest drei Förderbändern (1 - 4)
und zumindest zwei mit einem etwa 90° betragenden Transportrichtungswechsel verbundenen Übergangsstellen zwischen den Förderbändern (1 -4).

17. Anlage (1 - 7) nach Anspruch 16, bei der an zumindest einer Übergangsstelle zwischen den Förderbändern (1 - 4) eine Einrichtung zur Beladungszustandserfassung eines Aufnahmebereichs des folgenden der Förderbänder (2 - 4) und Steuerung des Transports der vorausgehenden Transporteinrichtung (1 - 3, 5) vorgesehen ist.

18. Verfahren zum Transportieren und Vereinzeln von Flugfrachtstücken beim Entladen eines Flugzeugs in einem Flughafen unter Verwendung eines Flugfrachtbehälters (5) nach einem der Ansprüche 1 bis 9 oder einer Anlage (1 - 6) nach einem der Ansprüche 10 bis 17.

19. Verfahren nach Anspruch 18, bei dem Flugfrachtbehälter (5) als Fahrwagen und Flugfrachtbehälter (5) als separate Container auf einem Fahrwagen direkt auf ein erstes Förderband (1) der Anlage (1 - 7) entladen werden.

20. Verfahren nach Anspruch 19, bei dem die Container zum Entladen um eine horizontale Achse gekippt und die Flugfrachtstücke durch eine Öffnung des Containers ausgeschüttet werden.

21. Verfahren nach einem der Ansprüche 18 bis 20, bei dem die Frachtstücke Flugpassagiergepäckstücke sind.
